# EUROPÄISCHE PATENTSCHRIFT

(11) **EP 3 191 313 B1**
(45) Veröffentlichungstag und Bekanntmachung des Hinweises auf die Patenterteilung: **16.05.2018**
(21) Anmeldenummer: 15774499.6
(22) Anmeldetag: 08.09.2015
(51) Int. Cl.: B60B 23/08, B60B 23/10

(54) **FAHRZEUGRAD MIT EINER RADFELGE UND EINER RADSCHEIBE**
VEHICLE WHEEL COMPRISING A WHEEL RIM AND A WHEEL DISC
ROUE DE VÉHICULE POURVUE D'UNE JANTE ET D'UN DISQUE DE ROUE

(30) Priorität: 09.09.2014 DE 102014112980
(43) Veröffentlichungstag der Anmeldung: 19.07.2017
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); MÄKE, Sandro, 01796 Dohma (DE); DRESSLER, Michael, 01159 Dresden (DE); HEILMANN, Christian, 01097 Dresden (DE); FRANKE, Florian, 01127 Dresden (DE)
(86) Internationale Anmeldenummer: PCT/DE2015/100385
(87) Internationale Veröffentlichungsnummer: WO 2016/037611

(56) Entgegenhaltungen:
- DE-A1- 10 105 113
- DE-C- 280 481
- FR-A- 436 626
- GB-A- 173 257
- US-A- 1 173 243

## Beschreibung

Die Erfindung betrifft ein Fahrzeugrad mit einer Radfelge, einer Radscheibe und mindestens ein die Radscheibe und die Radfelge verbindendes Verbindungselement, wobei das Verbindungselement durch ein Durchgangsloch im Felgenbett der Radfelge geführt und in einem Fügegang der Radscheibe gefügt ist.

Das Fahrzeugrad wird für motorisierte Fahrzeuge aller Art, insbesondere als für Personenkraftfahrzeuge und Motorräder angewandt.

Die Radscheibe kann als Radstern mit Speichen (Speichenrad) oder als weitestgehend geschlossenflächige Radschüssel ausgebildet sein.

Derartige Fahrzeugräder sind beispielsweise aus den DE 280481C oder US 1 173 243 A1 bekannt.

Für Ausführungen als Leichtbau-Fahrzeugrad werden z. B. Radfelgen bzw. Radscheiben aus Leichtmetall oder faserverstärktem Kunststoff verwendet.

Die zumeist Vielfach um den Umfang des Fahrzeugrades angeordneten Verbindungselemente werden durch jeweils einen Durchgang in der Radfelge geführt und jeweils in einen der über den Umfang der Radscheibe korrespondierend angeordneten Fügegänge kraftschlüssig gefügt.

Die Verbindungselemente können beispielsweise als Nieten oder Schrauben ausgebildet sein, wobei im Beispiel einer Schraube das Außengewinde des Schraubenschaftes in ein Innengewinde des Fügeganges der Radscheibe eingreift.

Ein Fahrzeugrad dieser Art ist aus der Druckschrift EP 1 858 715 B1 bekannt. Bei diesem Fahrzeugrad ist eine sternförmige Radscheibe (Radstern)aus Metall mittels mehrerer Verbindungselemente, die Schrauben oder Nieten sein können, mit der Radfelge aus Kunststoff verbunden. Das Verbindungselement ist von der Maulseite der Radfelge aus durch jeweils ein Durchgangsloch im Felgenbett der Radfelge geführt und in jeweils einen Fügegang der Speichenenden des Radsterns eingeschraubt oder genietet. Der Radstern stützt sich unter der kraftschlüssigen Verbindung im Felgeninnenraum gegen das Felgenbett und damit gegen die Radfelge ab. Die an der Radkonstruktion im Betrieb des Rades auftretenden Kräfte werden von der Radfelge über das Verbindungselement auf den Radstern übertragen.

Die komplexen Lasten am Fahrzeugrad stellen sich als ständig veränderliche Betriebslasten dar, die von der statischen Radlast je nach Kfz-Art und Zuladung, vom Fahrbahnprofil, vom Fahrverhalten durch Bremsen und Beschleunigen, von Temperatureinflüssen sowie von außergewöhnlichen Einwirkungen, wie Schlaglöcher und Borsteinanfahrt, abhängig sind.

Zur Übertragung der Lasten zwischen Radstern und Radfelge wird bei der Verbindung nach dem Stand der Technik ein Kraft- bzw. Reibschluss zwischen den Speichenenden und der Radfelge genutzt, wobei die notwendige Kraftübertragung durch die auf das Verbindungselement, vorzugsweise Schraubenelement, aufgebrachte Vorspannung gewährleistet wird.

Für die Übertragung der Kräfte aus der hochkomplexen Belastung wird eine enorm hohe Vorspannkraft des Schraubenelementes benötigt, die wiederum einen erheblich großen Querschnitt des Schraubenelements und eine entsprechend große Anlagefläche der Radscheibe am Felgenbett für die Flächenpressung zur Realisierung eines ausreichend großen Kraft- bzw. Reibschlusses erfordert. Dabei unterliegt insbesondere ein Felgenbett aus Kunststoff einem erheblichen Schwingreibverschleiß. Die materialintensive Gestaltung der Verbindung bei dem Fahrzeugrad nach der Druckschrift EP 1 858 715 B1 verdeutlichen die hohen Lastanforderungen.

Im Falle eines Abreißens des Kraftschlusses bei einer möglichen Überlast (Missbrauchsbelastung oder infolge des Kriechens des Materials an den Reibflächen) wird das Verbindungselement scherend mit einer hohen, dynamischen Querkraft belastet.

Zudem besteht insbesondere bei exzentrisch auftretenden Belastungen an der Verbindungsstelle, beispielsweise durch eine spezielle Speichengeometrie, die Gefahr des Klaffens der Verbindungsstelle, was ebenfalls zu einer scherenden Beanspruchung des Verbindungselements führt.

Vor allem gewindetragende Verbindungselemente, wie das üblicherweise verwendete Schraubenelement, tragen unter der scherenden Beanspruchung infolge der Kerbwirkung ihrer Gewindegänge ein hohes Bruchrisiko. Insofern kann ein plötzlicher und unvorhergesehener Versagenszustand an der sicherheitsrelevanten Verbindungsstelle zwischen Radscheibe und Radfelge eintreten.

Der Erfindung liegt deshalb die Aufgabe zugrunde, einerseits die Zuverlässigkeit und Haltbarkeit der Verbindung zwischen Radscheibe und Radfelge zu verbessern und andererseits im Hinblick an die gestellten Leichtbauanforderungen an ein Leichtbau-Fahrzeugrad den Massenbedarf sowie den erforderlichen Bauraum der Verbindung zu minimieren.

Zur Lösung der Aufgabe ist erfindungsgemäß eine das Verbindungselement koaxial umgebende Langhülse vorgesehen, die derart ausgebildet und angeordnet ist, dass sie sich zumindest teilweise in jeweils eine korrespondierende Ausnehmung der Radfelge und der Radscheibe formschlüssig erstreckt.

Die Verbindung zwischen Radfelge und Radscheibe erfolgt in Zusammenwirken des Verbindungselements mit der Langhülse. Das Verbindungselement ist durch jeweils ein Durchgangsloch geführt und stoff- und/oder kraftschlüssig in der Radscheibe gefügt, während in gleichachsiger, koaxialer Anordnung zur Längsachse des Verbindungselements eine Langhülse zumindest formschlüssig in jeweils eine, mit der Gestalt der Langhülse korrespondierende Ausnehmung der Radfelge und der Radscheibe eingebunden ist.

Das Verbindungselement, das vorzugsweise ein Schraubenelement, ein Schraubbolzen oder ein Pressstift sein kann, realisiert eine Vorspannkraft in axialer Richtung insbesondere derart, dass ein Kopfteil des Verbindungselements an einer Felgenaußenseite der Radfelge anliegt, der Schaft des Verbindungselements lose, das heißt beabstandet zu dessen inneren Mantelfläche durch das Durchgangsloch durchgeführt ist und ein Schaftende des Verbindungselements fest in den hierfür vorgesehenen Fügegang der Radscheibe bzw. der Speichenenden des Radsterns eingefügt ist. Das Fügen des Verbindungselements kann beispielsweise durch Einschrauben bzw. Einpressen und/oder durch Einkleben erfolgen.

Die Langhülse, die eine hohlzylindrische oder anderweitig hohlprofilierte Form aufweisen kann, sichert die Verbindung insbesondere durch den Formschluss mit der korrespondierenden Ausnehmung der Radfelge und der Radscheibe in einer quer zur Längsachse des Verbindungselements orientierten Richtung.

Mit dieser erfindungsgemäßen Ausführung der Verbindungsanordnung erfolgt eine effiziente Differenzierung der Kraftübertragung über die Verbindung, in dem das Verbindungselement selektiv die Übertragung der Längs- bzw. Zugkräfte in axialer Richtung übernimmt und die koaxial umgebende Langhülse die Aufnahme von Querkräften und Biegemomenten in radialer Richtung realisiert.

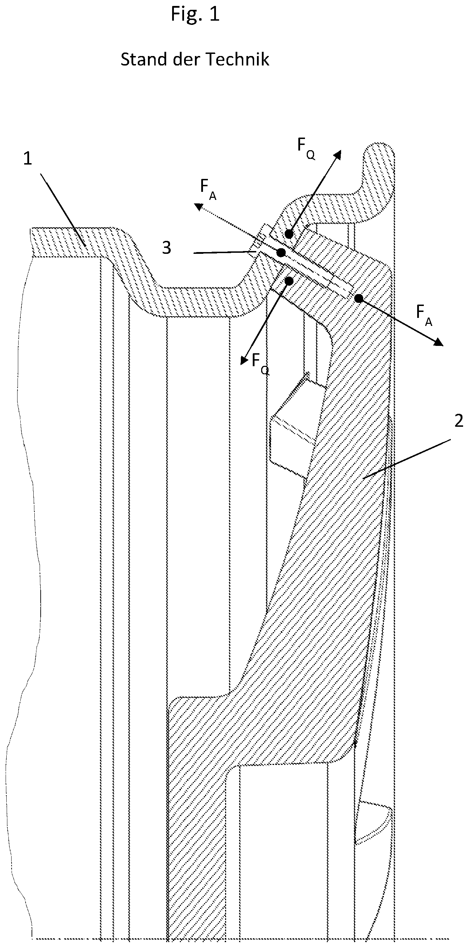

Hierbei geht die Erfindung davon aus, dass die hochkomplexen Belastungen der Radkonstruktion sich in unterschiedlich hohen und veränderlichen Anteilen aus Längskräften(F_{A}) und Querkräften (F_{Q}) sowie Biegemomenten (M_{B}) zusammensetzen, die von der Radscheibe über die einzelnen Verbindungselemente auf die Radfelge übertragen werden (vgl. Verbindung nach dem Stand der Technik nach Fig. 1).

Die Erfindung geht weiter davon aus, dass bei einer Verbindung nach dem Stand der Technik zur Übertragung der kombinierten Längs- und Querkräfte und zur Sicherung der Schraubenverbindung ein erhebliches Maß an Vorspannkraft des Verbindungselements in Abhängigkeit der maximal auftretenden Querkraft, der Anbindungsweise und des Reibwerts der Werkstoffpaarung der an der Verbindung beteiligten Bauteile (der Radfelge, Radscheibe) zu erbringen ist. Neben den auftretenden Längskräften in Schraubenachse ist der für die Übertragung der auftretenden Querkräfte erforderliche Reibschluss zwischen der Radfelge und der Radscheibe durch eine entsprechend hohe Vorspannkraft des Verbindungselements zu realisieren.

Tests im Rahmen der Abrollprüfung am Beispiel eines Sportwagens haben ergeben, dass bei einer üblichen Schraubenverbindung zwischen einem Leichtmetall-Radstern in Anbindung am Übergang ins Tiefbett des Felgenbetts der Radfelge, die Kräfte quer zur Schraubenachse in etwa 5 mal so hoch sind, wie die auftretenden Längskräfte in der Schraubenachse.

Unter Verwendung der Werkstoffpaarung Aluminium für den Leichtmetall-Radstern und Kunststoff für das Felgenbett mit einem Haftreibwert von µ_{T}=0,3 resultiert weiter ein Faktor von etwa 17 für die notwendige Vorspannkraft des Schraubenelements, welche gegenüber einer einfachen Klemmkraft zur

Übertragung der auftretenden, reinen Längskraft aufgebracht werden muss.

Der Faktor der notwendigen Vorspannkraft vergrößert sich durch den dynamischen Anteil der Kräfte, die sich durch das zyklisch drehende Fahrzeugrad ergeben.

Zudem ist eine weitere Erhöhung des Faktors der Vorspannkraft zu berücksichtigen, für den Fall, dass eine exzentrisch angreifende Axialkraft vorliegt, wie beispielsweise bei einer veränderten Speichengeometrie.

Die Höhe der Vorspannkraft ist dabei mit einer solchen Sicherheitsreserve zu wählen, dass das zusätzliche Auftreten von Biegemomenten an der Verbindungsstelle infolge einer exzentrischen Belastung oder Missbrauchs-Überlast kompensiert wird, um ein Klaffen der Verbindungsstelle und damit eine unmittelbar scherende Beanspruchung des Verbindungselements zu vermeiden.

Den Erfordernissen nach einer hohen Vorspannkraft des Verbindungselements zur Sicherung der Verbindung zwischen der Radfelge und der Radscheibe stehen die Gestaltungsanforderungen an ein filigranes Leichtbau-Fahrzeugrad entgegen.

Einerseits erfordert die notwendige hohe Vorspannkraft vor allem die Verwendung von Verbindungselementen mit einem großen wirksamen Querschnitt und/oder einer großen Wirklänge, die in feingliedrige Speichen mit geringem Speichenquerschnitt nicht eingebracht werden können.

Andererseits ist davon auszugehen, dass die hohe Vorspannkraft eine entsprechend hohe Flächenpressung zwischen den Kontaktflächen der beteiligten Bauteile (Felgeninnenseite der Radfelge, Speichenenden der Radscheibe) bewirkt und eine weitere Verringerung der Querschnitte der anliegenden Speichenenden der Radscheibe nicht erlaubt, da eine damit verbundene weitere Erhöhung der Flächenpressung zu einer überhöhten Druckbelastung und somit zur Schädigung der Radfelge und/oder der Radscheibe führen kann.

Durch die erfindungsgemäße Funktionstrennung in der Verbindungsanordnung, bei der das Verbindungselement im Wesentlichen nur die Längskräfte und die Langhülse die angreifenden Querkräfte und Biegemomente aufnimmt, ist das Verbindungselement, insbesondere ein scherempfindliches Schraubenelement, von den auftretenden hohen Querkräften erheblich entlastet.

In Realisierung dieser Funktionstrennung werden die Querkräfte nicht mehr über einen hohen Reibschluss zwischen der Radfelge und der Radscheibe übertragen, sondern durch den vornehmlich ausgebildeten Formschluss der Langhülse mit der Radfelge und der Radscheibe, so dass das Verbindungselement im Wesentlichen nur die verbleibenden, wesentlich geringeren Längskräfte zu übertragen hat und mithin die notwendige Vorspannkraft des Verbindungselements deutlich verringert werden kann. Der wenige verbleibende Reibschluss ist dabei nicht mehr maßgebend für die notwendige Lastübertragung.

Das ermöglicht zum einen den Querschnitt und /oder die Fügelänge des Verbindungselements zu verringern und reduziert zum anderen die Flächenpressung zwischen Felgeninnenseite der Radfelge und Speichenenden der Radscheibe, so dass letztlich eine schlanke Ausführung der Verbindungstelle mit geringeren Querschnittsflächen der anliegenden Speichenenden möglich wird und die Verbindung durch die geringere Druckbelastung auf das Material der Radfelge und/oder auf das Material der Radscheibe weniger schadensanfällig ist.

Die Möglichkeit des Einsatzes kleiner dimensionierter Verbindungselemente und Verbindungsstellen vermindert den notwendigen Bauraum der Verbindung und bewirkt dadurch auch Masse- und Kosteneinsparung.

Trotz Minimierung des Bauraums der Verbindung wird eine höhere Sicherheit der Verbindung zwischen der Radfelge und der Radscheibe gewährleistet. Auch im Falle einer Überlast beim Auftreten einer überhöhten Längskraft in Achsrichtung des Verbindungselements, welche den verbleibenden Reibschluss aufhebt, wird durch die erfindungsgemäße Verbindung das Risiko eines plötzlichen Totalversagen der Verbindung gemindert, da der hierbei fehlende Reibschluss durch den vornehmlichen Formschluss der Langhülse mit der Radfelge und der Radscheibe kompensiert wird und damit keine Scherwirkung am Verbindungselement auftreten kann.

Die Verbindung wird auch dadurch sicherer, das ein massereduziertes Verbindungselement eine Erhöhung der effektiven Dehnlänge mit sich bringt, und damit den unerwünschten Effekt des Schraubensetzens verringert, welcher zum Abfall der Vorspannkraft führen kann.

Bei Einsatz insbesondere eines Schraubenelementes als Verbindungselement sind aufgrund der minimierten Vorspannkraft einerseits weniger tragende Gewindegänge notwendig, was zu einer Verringerung der benötigten Einbaulänge führt.

Andererseits kann das Schraubenelement aufgrund der minimierten Vorspannkraft im Querschnitt schlanker ausgebildet werden, wobei sich bei gleichbleibender Einschraubtiefe die Zahl der verschraubten Gewindegänge vergrößert, was wiederum die Selbsthemmung der Verbindung verbessert und somit deren Sicherheit erhöht.

Das Schraubenelement kann aufgrund der verringerten Vorspannkraft, die es aufbringen muss, je nach Einsatzanforderungen kürzer und / oder im Querschnitt schlanker ausgebildet werden, wobei unter Mitwirkung der Langhülse stets eine sichere Verbindung gewährleistet wird.

Bei einer vorteilhaften Ausführungsform ist die korrespondierende Ausnehmung der Radfelge zumindest teilweise als radiale Erweiterung des Durchgangslochs ausgebildet.

Mit anderen Worten fasst bei dieser Ausführung der in der Radfelge erstreckte Abschnitt der Langhülse zumindest teilweise das Durchgangsloch der Radfelge in radialer Erstreckung ein. In diesem Abschnitt der Langhülse wird der Schaft des Verbindungselements unmittelbar, jedoch spielbehaftet durch den hohlen Querschnitt der Langhülse durchgeführt.

Durch diese Ausführung kann zum einen der notwendige Bauraum der Verbindung weiter minimiert werden. Die Langhülse ist in unmittelbarer Nachbarschaft des Verbindungselements angeordnet, ohne dass sich die Langhülse und das Verbindungselement in ihrer vorgesehenen unterschiedlichen Wirkung gegenseitig beeinflussen.

Diese Ausführung ist zum anderen leichter herstellbar, da die Ausnehmung für die Anordnung der Langhülse als einfache Ausfräsung des in der Radfelge vorhandenen Durchgangslochs gebildet werden kann.

Nicht zuletzt bietet der in der Radfelge erstreckte Abschnitt der Langhülse in der Art einer Auskleidung des Durchgangsloches einen mechanischen Schutz des Materials der Radfelge im Bereich des Durchgangslochs.

Bei einer weiteren vorteilhaften Ausführungsform ist die korrespondierende Ausnehmung der Radscheibe teilweise als radiale Erweiterung des Fügegangs ausgebildet ist.

Bei dieser Ausführung kleidet der in der Radscheibe erstreckte Abschnitt der Langhülse einen Teil des Fügegangs in radialer Erstreckung aus. In diesem Abschnitt der Langhülse wird das Verbindungselement unmittelbar, jedoch spielbehaftet durch den hohlen Querschnitt der Langhülse durchgeführt. Ein über diesen Abschnitt der Langhülse ragendes Schaftendes des Verbindungselements greift im verbleibenden Fügegang in vorbeschriebener Weise in die Radscheibe bzw. in die Speichenenden des Radsterns ein.

Vorzugsweise ist die Langhülse ringzylindrisch - in Form eines Hohlzylinders - ausgebildet. In dieser Querschnittsgestaltung der Langhülse können die auftretenden Querkräfte besonders gleichmäßig kompensiert werden.

Des Weiteren sind die erforderlichen korrespondierenden Ausnehmungen für die Aufnahme der hohlzylindrischen Langbuchse in der Radfelge und der Radscheibe mit einfacherem Werkzeug herstellbar.

Bevorzugt ist vorgesehen, dass der in der Radfelge erstreckte Abschnitt und /oder der in der Radscheibe erstreckte Abschnitt der Langhülse stoffschlüssig und/oder kraftschlüssig mit der Radfelge bzw. der Radscheibe verbunden ist.

Hierdurch kann die direkte Übertragung der Querkräfte über die Langhülse deutlich verbessert und damit die Sicherheit der Verbindung um ein weiteres erhöht werden.

In der praktischen Ausführung kann der in der Radfelge erstreckte Abschnitt der Langhülse in die zugehörige Ausnehmung eingeschraubt und/oder eingeklebt und/oder mittels einer Übermaßpassung eingefügt sein.

Ebenso kann der in der Radscheibe erstreckte Abschnitt der Langhülse in die zugehörige Ausnehmung eingeschraubt und/oder eingeklebt und/oder mittels einer Übermaßpassung eingefügt sein.

Die Verbindungstechniken können unabhängig voneinander für den in der Radfelge erstreckten Abschnitt und den in der Radscheibe erstreckten Abschnitt der Langhülse vorgesehen sein.

Insbesondere können hierdurch auch die Montagevorgänge zur Montage des Fahrzeugrades flexibler gestaltet werden.

Nicht zuletzt ermöglichen die zusätzlichen Verbindungstechniken eine Lagesicherung bzw. Fixierung der Langhülse während der Radmontage.

In einer bevorzugten Weiterbildung der Erfindung weist die Langhülse an einem felgenaußenseitig zugewandten Ende einen, vorzugsweise konisch, geweiteten Randbereich mit einer Sitzfläche für den Sitz eines, vorzugsweise konisch ausgebildeten, Kopfteils des Verbindungselements auf.

Der geweitete Rand der Langhülse stellt einerseits eine zusätzliche Fläche für die Anlage des Kopfteils des Verbindungselements an die Langhülse und andererseits eine zusätzliche Fläche der Langhülse für die Anlage an der Radfelge zur Verfügung und verbessert damit die Verteilung der auf die Radfelge wirkenden Flächenpressung.

Die Verteilung der Flächenpressung wird durch die konische Ausbildung des Randbereiches und der Sitzfläche des Kopfteils des Verbindungselements um ein weiteres verbessert.

Die Flächenpressung wird auch dadurch günstig beeinflusst, wenn die Langhülse einen geweiteten Randbereich in Form eines Auflageflansches zur Auflage an der Felgenaußenseite der Radfelge aufweist, welche eine zusätzliche Fläche der Langhülse für die Anlage an der Radfelge bereitstellt.

Vorzugsweise ist vorgesehen, dass die Sitzfläche der Langhülse eine raue Oberflächenstruktur, vorzugsweise eine geriffelte oder gezahnte Oberflächenstruktur aufweist.

Auf diese Weise kann mit Hilfe der Langhülse die Selbsthemmung gegen das Lösen des Verbindungselements verstärkt werden und damit die Sicherheit der Verbindung weiter erhöht werden.

Die Sicherheit der Verbindung kann weiter dadurch erhöht werden, dass die mit der Sitzfläche korrespondierende Anlagefläche des Kopfteils eine raue Oberflächenstruktur, vorzugsweise eine geriffelte oder gezahnte Oberflächenstruktur, aufweist.

In einer vorteilhaften Weiterbildung ist wenigstens eine Lochscheibe vorgesehen, welche zwischen der Felgeninnenseite der Radfelge und der Radanschlussseite der Radscheibe angeordnet ist.

Die Lochscheibe ist insbesondere derart ausgebildet, dass sie im Montagezustand, bei dem die Lochscheibe zwischen der Felgeninnenseite der Radfelge und der Radanschlussseite der Radscheibe angeordnet ist, die Langhülse umfasst oder von dieser umschlossen wird.

Hierdurch können unter Verwendung entsprechender Werkstoffpaarung die Reibverhältnisse zwischen den Kontaktflächen der Lochscheibe, der Radfelge und der Radscheibe so eingestellt werden, dass die erforderliche Vorspannkraft des Verbindungselements und in der Folge die Flächenpressung in der Verbindung weiter verringert werden kann.

Insbesondere kann im Zusammenwirken der Lochscheibe mit der Langhülse der Schwingreibverschleiß zwischen der Langhülse und der Radfelge sowie zwischen der Radfelge und der Radscheibe gemindert werden, was die Dauerhaftigkeit und Zuverlässigkeit der Verbindung weiter verbessert.

Zudem kann hierdurch die Radscheibe kontaktfrei zur Radfelge angeschlossen werden, so dass das Risiko einer Kontaktkorrosion zwischen Radfelge und Radscheibe minimiert und eine bessere Kompatibilität der Wärmeausdehnung erreicht werden kann.

Alternativ und mit den gleichen Vorzügen weist die Langhülse einen Flanschring auf, welcher zwischen der Felgeninnenseite der Radfelge und der Radanschlussseite der Radscheibe angeordnet ist.

Zusätzlich ist diese Ausführungsform besonders montagefreundlich.

Die gestellte Aufgabe wird erfindungsgemäß auch durch ein Fahrzeugrad gelöst, bei dem das Verbindungselement einen kolbenartigen Schaftabschnitt aufweist, welcher einen gegenüber dem Querschnitt eines endseitigen Schaftabschnitts radial erweiterten Querschnitt aufweist und zumindest teilweise in jeweils eine korrespondierende Ausnehmung des Durchgangsloches der Radfelge und des Fügeganges der Radscheibe formschlüssig erstreckt ausgebildet und angeordnet ist.

Zur Ausführung der Verbindung zwischen Radfelge und Radscheibe bedient sich das kombinierte Verbindungselement, welches schrauben- oder nietähnlich ausgebildet sein kann, zweier Schaftabschnitte, wobei der endseitige Schaftabschnitt stoff- und/oder kraftschlüssig im Fügegang der Radscheibe gefügt ist und der kolbenartige Schaftabschnitt zumindest formschlüssig in jeweils eine, mit der Gestalt des kolbenartigen Schaftabschnittes korrespondierende Ausnehmung des Durchgangsloches und des Fügeganges sitzt.

Der kolbenartige, formschlussbildende Schaftabschnitt kann unmittelbar benachbart zum endseitigen Schaftabschnitt angeordnet sein, welcher kraftschlüssig im Fügegang wirkt.

Das Fügen des endseitigen Schaftabschnitts im Fügegang der Radscheibe kann beispielsweise durch Einschrauben, Einpressen und/oder durch Einkleben erfolgen.

Das kombinierte Verbindungselement realisiert mittels eines an der Felgenaußenseite der Radfelge oder an der Ausnehmung des Durchgangsloches anliegenden Kopfteils und des in der Radscheibe eingreifenden endseitigen Schaftabschnitts die notwendige Vorspannkraft der Verbindung in Richtung der Längsachse des Verbindungselements, während der kolbenartige Schaftabschnitt im Formenschluss mit der Ausnehmung des Durchgangsloches und des Fügeganges die Sicherung der Verbindung in einer Querrichtung zur Längsachse des Verbindungselements übernimmt.

Mit dieser alternativen erfindungsgemäßen Ausführung der Verbindung erfolgt ebenfalls eine effiziente Differenzierung der Kraftübertragung, in dem das Verbindungselement im Betriebsfall die Übertragung der Längskräfte in axialer Richtung insgesamt ausübt, jedoch die Aufnahme von Querkräften und Biegemomenten im Wesentlichen nur vom radial erweiterten Schaftabschnitt übernommen wird, der damit eine kombinierte Belastung aus Längs- und Querkräften erfährt.

Die Querkräfte werden analog zur Ausführung der Langhülse nicht über den Reibschluss zwischen der Radfelge und der Radscheibe übertragen, sondern vornehmlich durch Formschluss des kolbenartigen Schaftabschnitts mit der Ausnehmung des Durchgangsloches der Radfelge und des Fügeganges der Radscheibe, so dass das übrige Verbindungselement, insbesondere der endseitige Schaftabschnitt des Verbindungselements im Wesentlichen nur die Längskräfte zu übertragen hat und mithin die notwendige Vorspannkraft des Verbindungselements deutlich verringert werden kann. Der geringe verbleibende Reibschluss ist auch hier nicht mehr maßgebend für die notwendige Lastübertragung.

Der schubkraftübertragende, kolbenartig erweiterte Schaftabschnitt verhindert infolge seines größeren Querschnitts mit vorzugsweise kerbfreier, glatter Oberfläche weitestgehend Scherwirkungen, wie sie an einem üblichen, gewindetragenden, zugkraftaufnehmenden Schaftabschnitt auftreten können. Dagegen ist der gegebenenfalls gewindetragende, endseitige Schaftabschnitt durch seine erfindungsgemäße Lage ausschließlich im Fügegang der Radscheibe keiner scherenden Belastung ausgesetzt.

Das ermöglicht es, den Querschnitt und /oder die Fügelänge des endseitigen Schaftabschnittes des Verbindungselements zu verringern, so dass letztlich ebenfalls eine schlanke Ausführung der Verbindungsstelle zur Radscheibe mit geringeren Querschnittsflächen der anliegenden Radscheibe bzw. Speichenenden der Radscheibe möglich wird und die Verbindung durch die geringere Druckbelastung auf das Material der Radfelge und/oder der Radscheibe weniger schadensanfällig ist.

Gegenüber der Ausführung einer Verbindungsanordnung mit einem Verbindungselement in Kombination mit einer Langhülse hat die vorstehend beschriebene alternative Ausführung des kombinierten Verbindungselements mit zwei Schaftabschnitten besondere Vorzüge hinsichtlich des Aufwandes und der Kosten bei der Herstellung der Verbindungsteile und der zu verbindenden Bauteile sowie bei der Montage des Fahrzeugrades.

Nach einer vorteilhaften Ausführungsform ist wenigstens eine Lochscheibe vorgesehen, welche, den kolbenartigen Schaftabschnitt einfassend, zwischen der Felgeninnenseite der Radfelge und der Radanschlussseite der Radscheibe angeordnet ist.

Hierdurch können unter geeigneter Materialwahl die Reibverhältnisse zwischen den Kontaktflächen der Lochscheibe, der Radfelge und der Radscheibe so eingestellt werden, dass die erforderliche Vorspannkraft des kombinierten Verbindungselements und in der Folge die Flächenpressung in der Verbindung weiter verringert werden kann.

Insbesondere kann im Zusammenwirken der Lochscheibe mit dem kombinierten Verbindungselement der Schwingreibverschleiß zwischen dem Verbindungselement und der Radfelge sowie zwischen der Radfelge und der Radscheibe gemindert werden, was die Dauerhaftigkeit und Zuverlässigkeit der Verbindung verbessert.

Durch den kontaktfreien Anschluss der Radscheibe zur Radfelge wird das Risiko einer Kontaktkorrosion zwischen den Bauteilen minimiert und eine bessere Kompatibilität der Wärmeausdehnung erreicht.

Das erfindungsgemäße Fahrzeugrad wird nachfolgend an verschiedenen Ausführungsbeispielen näher erläutert. Die zugehörigen Zeichnungen zeigen in
- Fig. 1: eine auszugsweise Schnittdarstellung eines Fahrzeugrades mit einer Radfelge und einem Radstern nach dem Stand der Technik,
- Fig. 2: eine auszugsweise Schnittdarstellung eines erfindungsgemäßen Fahrzeugrades mit einer Radfelge und einem Radstern, verbunden mittels einer Verbindungsanordnung nach einer ersten Ausführungsvariante mit einem Flachkopf-Schraubbolzen und einer ringzylindrischen Langhülse,
- Fig. 2a: eine auszugsweise Schnittdarstellung des Fahrzeugrades nach Fig. 2, verbunden mittels einer Verbindungsanordnung nach einer zweiten Ausführungsvariante mit dem Flachkopf-Schraubbolzen nach Fig. 2 und einer ringzylindrischen Langhülse in versenkter Anordnung,
- Fig. 3: eine auszugsweise Schnittdarstellung eines Fahrzeugrades, verbunden mittels einer Verbindungsanordnung nach einer dritten Ausführungsvariante mit einem Senkkopf-Schraubbolzen und einer Langhülse mit einem konisch geweiteten Randbereich und kragenförmigem Auflageflansch,
- Fig. 4: eine auszugsweise Schnittdarstellung eines Fahrzeugrades, verbunden mittels einer Verbindungsanordnung nach einer vierten Ausführungsvariante mit dem Senkkopf-Schraubbolzen nach Fig. 3 und einer Langhülse mit einem konisch geweiteten Randbereich in versenkter Anordnung,
- Fig. 4a: eine Detaildarstellung X der Verbindungsstelle des Fahrzeugrades nach Fig.4 ohne Verbindungselement,
- Fig. 5: eine auszugsweise Schnittdarstellung des Fahrzeugrades, verbunden mittels einer Verbindungsanordnung nach einer fünften Ausführungsvariante mit dem Senkkopf-Schraubbolzen und der Langhülse nach Fig. 3 sowie einer Lochscheibe,
- Fig. 6: eine auszugsweise Schnittdarstellung eines Fahr-zeugrades, verbunden mittels eines Flachkopf-Schraubbolzens mit kolbenartigem Schaftabschnitt.

Fig. 1 zeigt einen Ausschnitt eines Fahrzeugrades nach dem Stand der Technik mit einer Radfelge 1 und einem Radstern 2, die mittels eines Verbindungselements (Flachkopfschraube) 3 im Bereich des Felgenbetts im Übergang zum Tiefbett der Radfelge 1 verbunden sind. Die an der Radkonstruktion auftretenden Belastungen setzen sich in unterschiedlich hohen und veränderlichen Anteilen aus Längskräften(F_{A}), Querkräften (F_{Q}) sowie Biegemomenten (M_{B}) zusammen, die von der Radscheibe bzw. vom Radstern 2 über die einzelnen Verbindungselemente 3 auf das Felgenbett der Radfelge 1 übertragen werden. Von dem Verbindungselement 3 sind einerseits die in Längsachse wirkenden Längs- bzw. Zugkräfte (F_{A}) und andererseits die quer zur Längsachse wirkenden Querkräfte (F_{Q}) durch Aufbringen eines dementsprechenden Reibschlusses an den Kontaktflächen zwischen dem Felgenbett und der Radscheibe bzw. dem Radstern 2 zu übertragen, was eine sehr große Vorspannkraft des Verbindungselements erfordert.

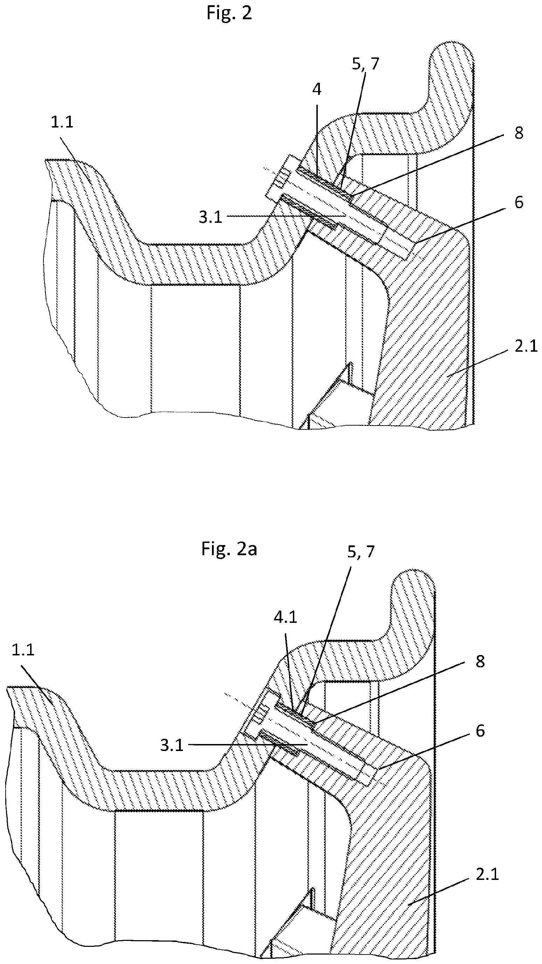

Das erste Ausführungsbeispiel der Erfindung zeigt in Fig. 2 einen Ausschnitt eines erfindungsgemäßen Fahrzeugrades, bestehend aus einer Radfelge 1.1 mit einem Felgenbett aus Faserverbundmaterial und einem Radstern 2.1 aus Aluminium.

Zur Anbindung des Radsterns 2.1 an die Radfelge 1.1 sind im Bereich des Felgenbetts im Übergang zum Tiefbett mehrere, entsprechend der Speichzahl um den Umfang der Radfelge 1.1 bzw. des Radsterns 2.1 verteilt angeordnete erfindungsgemäße Verbindungsanordnungen vorgesehen sind, die jeweils einen Flachkopf-Schraubbolzen 3.1 als Verbindungselement und eine ringzylindrisch geformte Langhülse 4 umfassen, welche jeweils ein Durchgangsloch 5 des Felgenbetts und einen zugeordneten Fügegang 6 des Speichenendes des Radsterns 2 belegen.

Die ringzylindrische Langhülse 4 erstreckt sich mit einem ersten Abschnitt über den gesamten Querschnitt des Felgenbetts und mit einem zweiten Abschnitt in das Speichenende des Radsterns 2.1. Der erste Abschnitt der Langhülse 4 belegt das Durchgangsloch 5 des Felgenbetts vollständig und schließt felgenaussenseitig bündig mit dem Durchgangsloch 5 ab; felgeninnenseitig ragt der zweite Abschnitt der Langhülse über das Durchgangsloch 5 hinaus, so dass die Langhülse 4 im Montagezustand einen Teil des Fügegangs 6 im Speichenende der Radsterns 2.1 belegt.

Zur Realisierung des Formschluss der Langhülse 4 nach Fig. 2 mit dem Felgenbett und dem Radstern 2.1 ist der erste Abschnitt der Langhülse 4 in eine zu dessen Außenkontur formgetreue ausgebildete radiale Erweiterung 7 des Durchgangsloches 5 eingebettet, wobei der über die Felgeninnenseite des Felgenbetts ragende zweite Abschnitt der Langhülse 4 in eine zu dessen Außenkontur formgetreu korrespondierende Ausnehmung 8 des Fügeganges 6 des Speichenendes des Radsterns 2.1 eingesteckt ist.

Die Ausnehmung 8 des Fügeganges 6 ist eine teilweise radiale Erweiterung 8 des Fügegangs 6 und erstreckt sich etwa über ein Drittel bis eine Hälfte der Gesamtlänge des Fügeganges. Das Ende der Ausnehmung 8 bildet eine axiale Anlagefläche für die eingesteckte Langhülse 4.

Der Flachkopf des Flachkopf-Schraubbolzens 3.1 liegt an der Felgenaussenseite des Felgenbetts und an der bündig an der Felgenaussenseite endenden Langhülse 4 an. Der Schaft des Flachkopf-Schraubbolzens 3.1 ist lose, das heißt beabstandet zur inneren Mantelfläche der Langhülse 4 durch diese hindurchgeführt. Ein Schaftende des Flachkopf-Schraubbolzens 3.1 ragt über das Ende der in der Ausnehmung 6 gelagerten Langhülse 4 hinaus in den Fügegang 6 des Radstern 2.1 eingesteckt, eingeklebt, eingeschraubt oder eingepresst ist. Ein Schaftende des Flachkopf-Schraubbolzens 3.1, der über die in der Ausnehmung 8 gelagerte Langhülse 4 hinausragt, weist ein Gewinde auf, das in den mit einem Innengewinde versehenen Fügegang 6 des Speichenendes des Radsterns 2.1 eingreift.

Damit wird einerseits die Langhülse 4 formschlüssig fixiert und andererseits die notwendige Vorspannung des Flachkopf-Schraubbolzens 3.1 zur Herstellung der wirksamen Verbindung zwischen Radfelge 1.1 und Radstern 2.1 erzeugt. Diese erfindungsgemäße Verbindung erfolgt damit unter Funktionstrennung der Kraftaufnahme.

Der Flachkopf-Schraubbolzen 3.1 überträgt im Betriebsfall des Fahrzeugrades im Wesentlichen nur die anfallenden Längskräfte F_{A}, während die formschlüssig gelagerte Langhülse 4 im Wesentlichen die auftretenden Querkräfte F_{Q} und Biegemomente M_{B} aufnimmt.

Die Entlastung des Flachkopf-Schraubenbolzens 3.1 bei der Lastverteilung auf diese Verbindungsanordnung ermöglicht, wie dargestellt, eine im Vergleich zu einer Verbindung nach dem Stand der Technik nach Fig. 1 schlanke Gestalt des Flachkopf-Schraubenbolzens und eine Minimierung der erforderlichen Reibflächen zwischen dem Felgenbett und den Speichenenden des Radsterns 2.1.

Durch die geringere Druckbelastung auf das Felgenbett aus Faserverbundmaterial infolge der reduzierbaren Flächenpressung und durch die Vermeidung jeglicher Scherbelastungen des Flachkopf-Schraubbolzens 3.1 durch die formschlüssig in die Radfelge 1.1 und den Radstern 2.1 eingebrachten Langhülse 4 ist die Verbindung äußerst dauerhaft und zuverlässig, was die Sicherheit der Verbindung und damit des Fahrzeugrades auf hohem Niveau gewährleistet.

Zur weiteren Verbesserung der Sicherheit der Verbindung kann der im Felgenbett erstreckte Abschnitt der Langhülse 4 im Durchgangsloch 5 des Felgenbetts eingeklebt sein oder mittels einer Übermaßpassung im Durchgangsloch 5 des Felgenbetts sitzen.

Außerdem kann der in den Radsterns 2.1 erstreckte Abschnitt der Langhülse 4 in die Ausnehmung 8 des Fügeganges 6 des Radsterns 2.1 eingeklebt oder mittels einer Übermaßpassung in die Ausnehmung 8 eingepasst sein.

Fig. 2a zeigt in einem zweiten Ausführungsbeispiel das Fahrzeugrad nach Fig. 2 mit einer alternativen Verbindungsanordnung zur Anbindung des Radsterns 2.1 an die Radfelge 1.1.

Nachfolgend werden lediglich die Unterschiede gegenüber dem vorausgehenden Ausführungsbeispiel erörtert.

Bei diesem Ausführungseispiel nach Fig. 2a umfassen die erfindungsgemäßen Verbindungsanordnungen jeweils den Flachkopf-Schraubbolzen 3.1 nach Fig. 2 als Verbindungselement kombiniert mit einer ringzylindrischen Langhülse 4.1 in kürzerer Ausführung.

Bei der kürzeren Ausführung der ringzylindrischen Langhülse 4.1 erstreckt sich der im Felgenbett angeordnete, erste Abschnitt der Langhülse 4.1 im Unterschied zur Langhülse 4 nach Fig. 2 nur über einen Teil des Felgenbettquerschnitts, so dass das felgenaußenseitig gerichtete Ende der Langhülse 4.1 im Felgenbett endet. Das Durchgangsloch 5 des Felgenbetts weist eine entsprechend kürzer erstreckte, korrespondierende Ausnehmung 7 für den ersten Abschnitt auf.

Mit einer sich anschließenden Ausnehmung des Felgenbetts entsprechend des Flachkopfes, kann der Flachkopf-Schraubbolzen 3.1 in das Felgenbett versenkt angeordnet werden.

Die Länge des ersten, im Felgenbett erstreckten Abschnitts der Langhülse 4.1 ist in hier so bemessen, dass das bündig am Ende der Ausnehmung des Felgenbetts und an der Langhülse 4.1 anliegende Kopfteil bündig mit der Felgenaußenseite abschließt.

Durch diese Ausführung kann ohne Einschränkung der erfindungsgemäßen Funktionstrennung der Kraftaufnahme durch Flachkopf-Schraubbolzen 3.1 und Langhülse 4.1 und damit ohne Beeinträchtigung der vorteilhaften Wirkung der Verbindung der Platz- und Materialbedarf der Verbindung verringert werden.

Zudem erleichtert die versenkte Ausführung des Flachkopf-Schraubbolzens 3.1 das Aufziehen eines hier nicht dargestellten Reifens auf das Felgenbett.

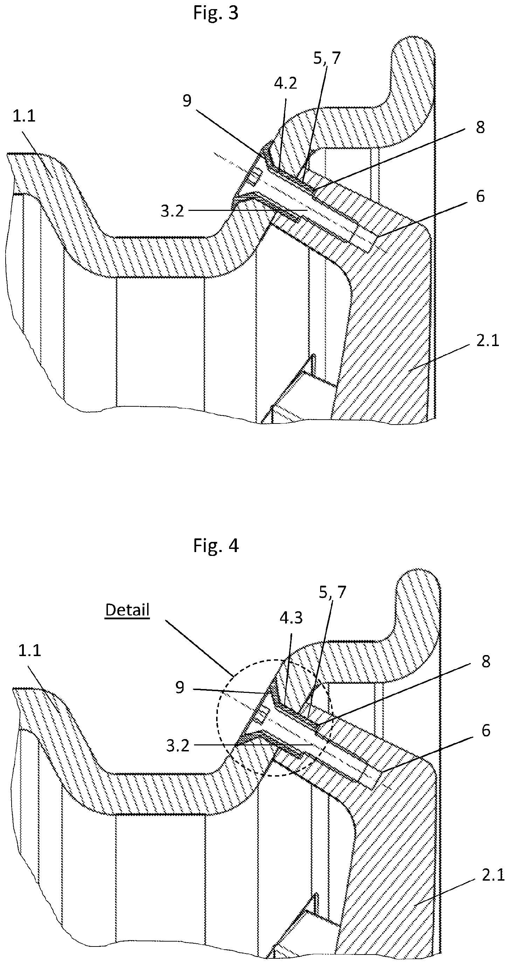

Fig. 3 zeigt in einem dritten Ausführungsbeispiel das Fahrzeugrad nach Fig. 2 mit einer weiteren alternativen Verbindungsanordnung zur Anbindung des Radsterns 2.1 an die Radfelge 1.1.

Nachfolgend werden lediglich die Unterschiede gegenüber dem Ausführungsbeispiel nach Fig. 2 erörtert.

Bei diesem Ausführungseispiel nach Fig. 3 umfassen die erfindungsgemäßen Verbindungsanordnungen jeweils einen Senkkopf-Schraubbolzen 3.2 als Verbindungselement und eine Langhülse 4.2.

Die Langhülse 4.2 nach Fig. 3 weist im Unterschied zur ringzylindrischen Langhülse 4 nach Fig. 2 neben einem felgeninnenseitig gerichteten, ringzylindrischen Bereich einen felgenaußenseitig gerichteten, konisch geweiteten Randbereich mit einem kragenförmigen Auflageflansch auf.

Der erste, über den gesamten Querschnitt des Felgenbetts erstreckte Abschnitt der derart geformten Langhülse 4.2 ist in einer entsprechend zu seiner Außenkontur formgetreue ausgebildete radialen Erweiterung 7 des Durchgangsloches 5 angeordnet, wobei der konische Randbereich der Langhülse 4.2 an einer gefasten Auflagefläche der Ausnehmung 7 des Durchgangsloches 5 anliegt und sich der Auflageflansch des Randbereichs der Langhülse 4.2 über die Oberfläche der Felgenaußenseite erstreckt.

Der Senkkopf-Schraubbolzen 3.2 ist lose durch die Langhülse 4.2 durchgeführt, wobei dessen Senkkopf in dem konisch geweiteten Randbereich der Langhülse 4.2 aufgenommen ist und an einer mit dem Senkkopf korrespondierenden Sitzfläche 9 anliegt.

Damit wird die Anbindungsfläche der Langhülse 4.2 an das Felgenbett erhöht, womit die Flächenpressung zwischen der Langhülse 4.2 und dem Felgenbett verringert wird, was insbesondere bei dem Felgenbett aus Faserverbundmaterial eine erhebliche Materialschonung bedeutet.

Zudem wird mittels der Langhülse 4.2 die Anbindungsfläche des Senkkopfes des Senkkopf-Schraubbolzens 3.2 an das Felgenbett erhöht und somit mit gleichen Vorzügen die Flächenpressung zwischen dem Senkkopf-Schraubbolzens 3.2 und dem Felgenbett verringert.

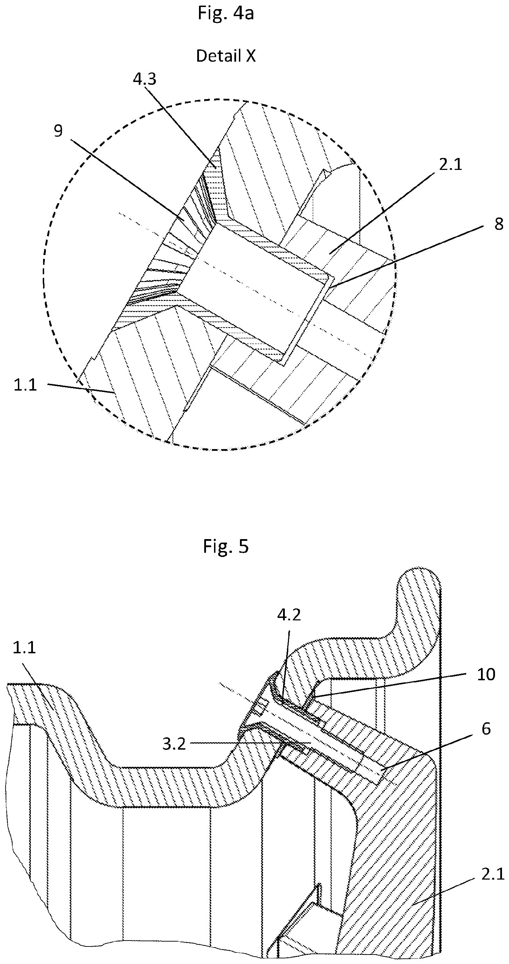

In Fig. 4 zeigt ein viertes Ausführungsbeispiel eines Fahrzeugrads in einer ähnlichen Ausführung wie nach Fig. 3 mit einer weiteren alternativen Verbindungsanordnung zur Anbindung des Radsterns 2.1 an die Radfelge 1.1.

Nachfolgend werden lediglich die Unterschiede gegenüber dem Ausführungsbeispiel nach Fig. 3 erörtert.

Bei diesem Ausführungseispiel nach Fig. 4 umfassen die erfindungsgemäßen Verbindungsanordnungen jeweils den Senkkopf-Schraubbolzen 3.2 nach Fig. 3 als Verbindungselement kombiniert mit einer Langhülse 4.3.

Die Langhülse 4.3 nach Fig. 4 weist im Unterschied zur Langhülse 4.2 nach Fig. 3 neben dem felgeninnenseitig gerichteten, ringzylindrischen Bereich einen felgenaußenseitig gerichteten, konisch geweiteten und verdickten Randbereich auf.

Der über den gesamten Querschnitt des Felgenbetts erstreckte erste Abschnitt der Langhülse 4.3 ist in einer entsprechend zu seiner Außenkontur formgetreue ausgebildete radialen Erweiterung 7 des Durchgangsloches 5 angeordnet, wobei der konische Randbereich der Langhülse 4.2 an einer gefasten Auflagefläche der Ausnehmung 7 des Durchgangsloches 5 anliegt.

Der konisch geweitete und verdickte Randbereich der Langhülse 4.3 schließt bündig mit der Felgenaußenseite des Felgenbetts ab.

Der Senkkopf des Senkkopf-Schraubbolzens 3.2 ist in dem konisch geweiteten Randbereich der Langhülse 4.3 korrespondierend zu dessen Sitzfläche 9 platziert, so dass die gesamte Verbindungsanordnung bündig mit der Felgenaussenseite abschließt.

Auch durch diese Ausführungsform wird die Anbindungsfläche der Langhülse 4.3 an das Felgenbett sowie die Anbindungsfläche des Senkkopfes des Schraubbolzens 3.2 an die Langhülse 4.3 erhöht und somit die Flächenpressung zwischen dem Senkkopf des Senkkopf-Schraubbolzens 3.2, der Langhülse 4.3 und dem Felgenbett der Radfelge 1.1 verringert.

Zudem vereinfacht die versenkte Ausführung von Senkkopf-Schraubbolzen 3.2 und Langhülse 4.3 das Aufziehen des hier nicht dargestellten Reifens auf das Felgenbett.

Die Sitzfläche 9 des konisch geweiteten Randbereiches der Langhülse 4.3 - wie auch der Langhülse 4.2 - kann zusätzlich aufgeraut oder geriffelt ausgebildet sein, wie in Fig. 4a in vergrößerter Detaildarstellung X der Langhülse 4.3 nach Fig. 4, gezeigt ist. In dieser Detaildarstellung ist der Senkkopf-Schraubbolzen 3.2 der Übersichtlichkeit halber nicht dargestellt.

Vorzugsweise ist auch eine der Sitzfläche 9 zugewandte Anlagefläche des Senkkopfes des Senkkopf-Schraubbolzens 3.2 aufgeraut oder geriffelt ausgebildet.

Dadurch wird die Selbsthemmung des Schraubbolzens 3.2 gegen das Losdrehen erhöht, was die Sicherheit der Verbindung um ein weiteres verbessert.

Fig. 5 zeigt in einem fünften Ausführungsbeispiel ein Fahrzeugrad in einer ähnlichen Ausführung wie nach Fig. 3 mit einer weiteren alternativen Verbindungsanordnung zur Anbindung des Radsterns 2.1 an die Radfelge 1.1.

Bei diesem Ausführungseispiel nach Fig. 5 umfassen die erfindungsgemäßen Verbindungsanordnungen jeweils einen Senkkopf-Schraubbolzen 3.2 und eine Langhülse 4.2 gemäß der Ausführung nach dem Ausführungsbeispiel in Fig. 3.

Im Unterschied zum Ausführungsbeispiel nach Fig. 3 weist die Verbindungsanordnung zusätzlich eine Lochscheibe 10 auf, die den felgeninnenseitig über das Durchgangsloch 5 überstehenden, zweiten Abschnitt der Langhülse 4.2 umgibt.

Vorzugsweise ist in einer Vormontagestufe die Lochscheibe 10 an der Felgeninnenseite des Felgenbetts - jeweils ein Durchgangsloch 5 umgebend - mit der Radfelge 1.1 verbunden oder an der Anschlussseite der Speichenenden - jeweils einen Fügegang 6 umgebend - mit dem Radstern 2.1 verbunden.

Die Lochscheibe 10 ist im Endmontagezustand des Fahrzeugrades zwischen den Kontaktflächen der Felgeninnenseite des Felgenbetts und der Anschlussseite des Speichenendes des Radsterns 2.1 angeordnet. Sie kann durch geeignete Materialwahl und Gestaltung dazu verwendet werden, die Reibverhältnisse zwischen den Kontaktflächen zu verändern und einzustellen, um die benötigte Vorspannkraft des Senkkopf-Schraubbolzens 3.2 weiter zu verringern.

Weiterhin kann hierdurch der auftretende Schwingreibverschleiß zwischen dem Felgenbett und dem Radstern 2.1 und ggf. auch zwischen der Langhülse 4.2 und dem Felgenbett weiter gemindert werden, was sich insbesondere bei dem Felgenbett aus Faserverbundmaterial günstig auswirkt und die Dauerhaftigkeit und Zuverlässigkeit der Verbindung weiter verbessert.

Zudem kann im Zusammenspiel der Langhülse 4.2 und der Lochscheibe 10 der Radstern 2.1 kontaktfrei zum Felgenbett angeschlossen werden, so dass das Risiko einer Kontaktkorrosion zwischen den Materialien der Radfelge 2.1 und des Radsterns 2.1 minimiert und eine bessere Kompatibilität der Wärmeausdehnung erreicht werden kann.

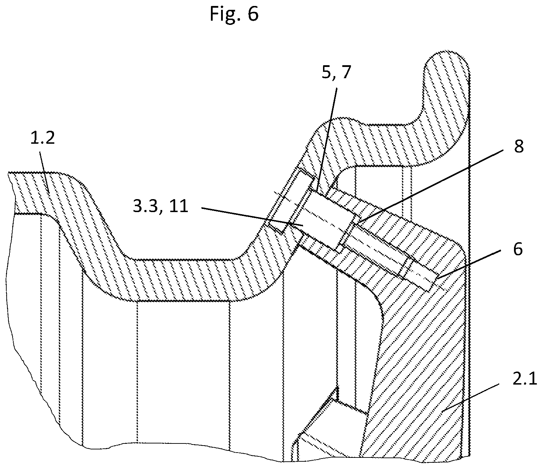

In Fig. 6 ist ein Ausschnitt eines erfindungsgemäßen Fahrzeugrades, bestehend aus einer Radfelge 1.2 aus Aluminium und einem Radstern 2.1 aus Aluminium dargestellt.

Zur Anbindung des Radsterns 2.1 an die Radfelge 1.2 sind im Bereich des Felgenbetts im Übergang zum Tiefbett mehrere, entsprechend der Speichzahl um den Umfang der Radfelge 1.2 bzw. des Radsterns 2.1 verteilt angeordnete Flachkopf-Schraubbolzen 3.3 als Verbindungselemente vorgesehen, die jeweils ein Durchgangsloch 5 des Felgenbetts und einen zugeordneten Fügegang 6 des Speichenendes des Radsterns 2.1 belegen.

Der Flachkopf-Schraubbolzen 3.3 weist einen kolbenartigen Schaftabschnitt 11 mit glatter Oberfläche auf, der sich unmittelbar an das endständige Schaftende anschließt, welches zum Fügen im Radstern 2.1 mit einem Gewinde versehen ist. Der kolbenartige Schaftabschnitt 11 hat im Vergleich zum Querschnitt des endseitigen Schaftabschnitts einen radial geweiteten Querschnitt und erstreckt sich im Montagezustand mit einem ersten Abschnitt teilweise im Felgenbett und mit einem zweiten Abschnitt in das Speichenende des Radsterns 2.1.

Der erste Abschnitt des kolbenartigen Schaftabschnittes 11 belegt das Durchgangsloch 5 des Felgenbetts nur teilweise, so dass das Durchgangsloch 5 des Felgenbetts eine entsprechend partiell ausgebildete radiale Erweiterung 7 für den ersten Abschnitt aufweist. Daran schließt sich eine Ausnehmung für den Flachkopf des Flachkopf-Schraubbolzen 3.3 an.

Der Flachkopf-Schraubbolzen 3.3 schließt im eingeschraubten Zustand bündig mit der Felgenaußenseite des Felgenbetts ab, wobei der Flachkopf in der hierfür vorgesehenen Ausnehmung aufgenommen ist und eine Bodenfläche der Ausnehmung als Sitzfläche für den Flachkopf dient.

Der endseitige Schaftabschnitt des Flachkopf-Schraubbolzens 3.3 bewirkt mittels seines Außengewindes, welches in das Innengewinde des Fügegangs 6 des Radsterns 2.1 eingreift, eine kraftschlüssige Verschraubung.

Zur Realisierung des zusätzlichen Formschlusses zwischen Radfelge 1.2, Radstern 2.1 und kolbenartigem Schaftabschnitt 11 sitzt im eingeschraubten Zustand des Flachkopf-Schraubbolzens 3.3 der erste Abschnitt des kolbenartigen Schaftabschnitts 11 in einer zu dessen Außenkontur formgetreu korrespondierenden radialen Erweiterung 7 des Durchgangsloches 5 und der zweite Abschnitt in einer zu dessen Außenkontur formgetreu korrespondierenden Ausnehmung 8 des Fügeganges 6 des Speichenendes des Radsterns 2. Die Ausnehmung 8 des Fügeganges 6 ist eine teilweise radiale Erweiterung 8 des Fügegangs 6.

Der erste Abschnitt des kolbenartigen Schaftabschnitts 11 erstreckt sich im eingeschraubten Zustand des Flachkopf-Schraubbolzens 3.3 etwa über die Hälfte der Gesamtlänge des Durchgangsloches 5 während der zweite Abschnitt sich etwa über ein Viertel bis ein Drittel der Gesamtlänge des Fügeganges 6 erstreckt.

Im Ergebnis wird einerseits der kolbenartigen Schaftabschnitt 11 formschlüssig fixiert und andererseits die notwendige Vorspannung des Flachkopf-Schraubbolzens 3.3 zur Herstellung der wirksamen Verbindung zwischen Radfelge 1.2 und Radstern 2.1 erzeugt.

Die Querkräfte F_{Q} werden im Betriebsfall des Fahrzeugrades nicht über Reibschluss zwischen den Kontaktflächen des Felgenbetts und des Radsterns 2 übertragen, sondern vornehmlich durch den Formschluss zwischen dem kolbenartigen Schaftabschnitt 11 und der Erweiterung 7 des Durchgangsloches 5 bzw. der Ausnehmung 8 des Fügeganges 6.

Infolgedessen ist eine geringere Vorspannkraft des Flachkopf-Schraubbolzen 3.3 zur Realisierung einer sicheren Verbindung erforderlich, weshalb der Gewindequerschnitt des endseitigen Schaftabschnittes - wie in Fig. 6 ersichtlich - deutlich geringer sein kann als der Querschnitt des kolbenartigen Schaftabschnitts 11.

Die Verbindungsstelle ist dadurch im Vergleich zu einer Verbindung nach dem Stand der Technik nach Fig. 1 schlanker ausgebildet und weist zugleich geringere Kontaktflächen der Felgeninnenseite der Radfelge 1.2 und der Felgeninnenseite anliegenden Speichenenden des Radsterns 2.1 auf.

Auf Grund der geringeren Druckbelastung auf das Felgenbett und die Speichenenden des Radsterns 2.1 aus Aluminium ist auch diese Verbindung weniger schadensanfällig und dauerhaft zuverlässig, was die Sicherheit der Verbindung auf hohem Niveau gewährleistet.

## Patentansprüche

1. Fahrzeugrad mit einer Radfelge, einer Radscheibe und mindestens ein die Radscheibe und die Radfelge verbindendes Verbindungselement, wobei das Verbindungselement durch ein Durchgangsloch der Radfelge geführt und in einem Fügegang der Radscheibe gefügt ist, **dadurch gekennzeichnet, dass** eine das Verbindungselement (3, 3.1, 3.2) koaxial umgebende Langhülse (4, 4.1, 4.2, 4.3) vorgesehen ist, die derart ausgebildet und angeordnet ist, dass sie sich zumindest teilweise in eine korrespondierende Ausnehmung (7) der Radfelge (1.1, 1.2) und eine korrespondierende Ausnehmung (8) der Radscheibe (2.1) formschlüssig erstreckt.

2. Fahrzeugrad nach Anspruch 1, **dadurch gekennzeichnet, dass** die korrespondierende Ausnehmung (7) der Radfelge (1.1, 1.2) zumindest teilweise als radiale Erweiterung (7) des Durchgangslochs (5) ausgebildet ist.

3. Fahrzeugrad nach Anspruch 1 oder 2, **dadurch gekennzeichnet, dass** die korrespondierende Ausnehmung (8) der Radscheibe (2.1) teilweise als radiale Erweiterung (8) des Fügegangs (6) ausgebildet ist.

4. Fahrzeugrad nach einem der Ansprüche 1 bis 3, **dadurch gekennzeichnet, dass** die Langhülse (4, 4.1) ringzylindrisch ausgebildet ist.

5. Fahrzeugrad nach einem der vorstehenden Ansprüche, **dadurch gekennzeichnet, dass** der in der Radfelge (1.1, 1.2) erstreckte Abschnitt und / oder der in der Radscheibe (2.1) erstreckte Abschnitt der Langhülse (4, 4.1, 4.2, 4.3) stoffschlüssig und/oder kraftschlüssig mit der Radfelge (1.1, 1.2) bzw. mit der Radscheibe (2.1) verbunden ist.

6. Fahrzeugrad nach einem der Ansprüche 2 bis 5, **dadurch gekennzeichnet, dass** die Langhülse (4.2, 4.3) an einem felgenaußenseitig zugewandten Ende einen, vorzugsweise konisch, geweiteten Randbereich mit einer Sitzfläche (9) für den Sitz eines, vorzugsweise konisch ausgebildeten, Kopfteils des Verbindungselements (3, 3.1, 3.2) aufweist.

7. Fahrzeugrad nach Anspruch 6, **dadurch gekennzeichnet, dass** die Sitzfläche (9) eine raue Oberflächenstruktur, vorzugsweise eine geriffelte oder gezahnte Oberflächenstruktur, aufweist.

8. Fahrzeugrad nach Anspruch 6 oder 7, **dadurch gekennzeichnet, dass** die mit der Sitzfläche (9) korrespondierende Anlagefläche des Kopfteils eine raue Oberflächenstruktur, vorzugsweise eine geriffelte oder gezahnte Oberflächenstruktur, aufweist.

9. Fahrzeugrad nach einem der vorstehenden Ansprüche, **dadurch gekennzeichnet, dass** wenigstens eine Lochscheibe (10) vorgesehen ist, welche zwischen der Felgeninnenseite der Radfelge (1.1, 1.2) und der Radanschlussseite der Radscheibe (2.1) angeordnet ist.

10. Fahrzeugrad nach einem der Ansprüche 1 bis 8, **dadurch gekennzeichnet, dass** die Langhülse (4, 4.1) einen Flanschring aufweist, welcher zwischen der Felgeninnenseite der Radfelge (1.1, 1.2) und der Radanschlussseite der Radscheibe (2.1) angeordnet ist.

11. Fahrzeugrad, welches eine Radfelge, eine Radscheibe und mindestens ein die Radscheibe und die Radfelge verbindendes Verbindungselement aufweist, wobei das Verbindungselement durch ein Durchgangsloch der Radfelge geführt und in einem Fügegang der Radscheibe gefügt ist, **dadurch gekennzeichnet, dass** das Verbindungselement (3.3) einen kolbenartigen Schaftabschnitt (11) aufweist, welcher einen gegenüber dem Querschnitt eines endseitigen Schaftabschnitts radial erweiterten Querschnitt aufweist und zumindest teilweise in jeweils einer korrespondierenden Ausnehmung (7) des Durchgangsloches (5) und des Fügeganges (6) der Radscheibe (2.1) formschlüssig erstreckt ausgebildet und angeordnet ist.

12. Fahrzeugrad nach Anspruch 11, **dadurch gekennzeichnet, dass** wenigstens eine Lochscheibe (10) vorgesehen ist, welche, den kolbenartigen Schaftabschnitt (11) einfassend, zwischen der Felgeninnenseite der Radfelge (1.1, 1.2) und der Radanschlussseite der Radscheibe (2.1)angeordnet ist.

## Claims

1. Vehicle wheel with a wheel rim, a wheel disk and at least one connecting element that connects the wheel disk and the wheel rim, whereby the connecting element is guided through a clearance hole of the wheel rim and is joined in a joining channel of the wheel disc, **characterised in that** an elongated sleeve (4, 4.1, 4.2, 4.3) is provided that surrounds the connecting element (3, 3.1, 3.2) coaxially, which sleeve is designed and arranged in such a way that at least part of said sleeve positively extends into a corresponding recess (7) of the wheel rim (1.1, 1.2) and into a corresponding recess (8) of the wheel disc (2.1).

2. Vehicle wheel according to claim 1 **characterised in that** the corresponding recess (7) of the wheel rim (1.1, 1.2) is designed in least in part as a radial extension (7) of the clearance hole (5).

3. Vehicle wheel according to claim 1 or 2 **characterised in that** the corresponding recess (8) of the wheel disk (2.1) is designed in least in part as a radial extension (8) of the joining channel (6).

4. Vehicle wheel according to one of claims 1 to 3 **characterised in that** the elongated sleeve (4, 4.1) is of an annular cylindrical design.

5. Vehicle wheel according to one of the foregoing claims **characterised in that** a section of the elongated sleeve (4, 4.1, 4.2, 4.3) that extends in the wheel rim (1.1, 1.2) and/or a section of the elongated sleeve that extends in the wheel disc (2.1) is firmly bonded and/or connected in a force-fit manner to the wheel rim (1.1, 1.2) or the wheel disc (2.1) respectively.

6. Vehicle wheel according to one of claims 2 to 5 **characterised in that** the elongated sleeve (4.2, 4.3) comprises, on an end facing a rim outer side, a - preferably tapered - widened peripheral area with a seat surface (9) for a seat of a - preferably tapered - head section of the connecting element (3, 3.1, 3.2).

7. Vehicle wheel according to claim 6 **characterised in that** the seat surface (9) has a rough surface structure, preferably a corrugated or serrated surface structure.

8. Vehicle wheel according to claim 6 or 7 **characterised in that** the contact surface of the head section corresponding to the seat surface (9) has a rough surface structure, preferably a corrugated or serrated surface structure.

9. Vehicle wheel according to one of the foregoing claims **characterised in that** at least one perforated disc (10) is included that is arranged between an inner side of the wheel rim (1.1, 1.2) and a wheel attachment side of the wheel disc (2.1).

10. Vehicle wheel according to one of claims 1 to 8 **characterised in that** the elongated sleeve (4, 4.1) comprises a flange ring that is arranged between an inner side of the wheel rim (1.1, 1.2) and a wheel attachment side of the wheel disc (2.1).

11. A vehicle wheel, wherein the wheel comprises a wheel rim, a wheel disc and at least one connecting element connecting the wheel disc and the wheel rim, whereby the connecting element is guided through a clearance hole of the wheel rim and joined in a joining channel of the wheel disc, **characterised in that** the connecting element (3.3) comprises a piston-like shaft section (11) which has a radially extended cross section compared with a cross section of a shaft section at its end and at least partly extends into, in each case, a corresponding recess (7) of the clearance hole (5) and of the joining channel (6) of the wheel disc (2.1) in an interlocking manner.

12. Vehicle wheel according to claim 11 **characterised in that** at least one perforated disc (10) which encompasses the piston-like shaft section (11) and is arranged between an inner side of the wheel rim (1.1, 1.2) and a wheel attachment side of the wheel disc (2.1).

## Revendications

1. Roue de véhicule avec une jante, un disque de roue et au moins un élément de liaison entre le disque de roue et la jante, l'élément de liaison étant guidé à travers un trou de passage de la jante et assemblé dans un passage d'assemblage du disque de roue, **caractérisée en ce que** l'élément de liaison (3, 3.1, 3.2) est enveloppé coaxialement dans un manchon long (4, 4.1, 4.2, 4.3) conçu et disposé de manière à s'étendre par complémentarité de forme au moins partiellement dans un creux (7) correspondant de la jante (1.1, 1.2) et dans un creux (8) correspondant du disque de roue (2.1).

2. Roue de véhicule selon la revendication 1, **caractérisée en ce que** le creux (7) correspondant de la jante (1.1, 1.2) est conçu au moins partiellement comme une extension radiale (7) du trou de passage (5).

3. Roue de véhicule selon la revendication 1 ou 2, **caractérisée en ce que** le creux (8) correspondant du disque de roue (2.1) est conçu partiellement en tant qu'extension radiale (8) du passage d'assemblage (6).

4. Roue de véhicule selon l'une des revendications 1 à 3, **caractérisée en ce que** le manchon long (4, 4.1) présente une forme cylindrique annulaire.

5. Roue de véhicule selon l'une des revendications précédentes, **caractérisée en ce que** la partie étendue dans la jante (1.1, 1.2) et/ou la partie étendue dans le disque de roue (2.1) du manchon long (4, 4.1, 4.2, 4.3) sont liées à la jante (1.1, 1.2) ou au disque de roue (2.1) par liaison de matière et/ou par adhérence.

6. Roue de véhicule selon l'une des revendications 2 à 5, **caractérisée en ce que** le manchon long (4.2, 4.3) présente, à une extrémité orientée vers l'extérieur de la jante, une périphérie élargie de préférence conique avec une surface d'assise (9) pour le logement de la tête de préférence conique de l'élément de liaison (3, 3.1, 3.2).

7. Roue de véhicule selon la revendication 6, **caractérisée en ce que** la surface d'assise (9) présente une structure de surface rugueuse, de préférence rainurée ou dentée.

8. Roue de véhicule selon la revendication 6 ou 7, **caractérisée en ce que** la surface de contact correspondant à la surface d'assise (9) de la tête présente une structure de surface rugueuse, de préférence rainurée ou dentée.

9. Roue de véhicule selon les revendications précédentes, **caractérisée en ce que** au moins un disque perforé (10) est disposé entre la face interne de la jante (1.1, 1.2) et le côté de raccordement à la roue du disque de roue (2.1).

10. Roue de véhicule selon les revendications 1 à 8, **caractérisée en ce que** le manchon long (4, 4.1) présente une bride annulaire disposée entre la face interne de la jante (1.1, 1.2) et le côté de raccordement à la roue du disque de roue (2.1).

11. Roue de véhicule présentant une jante, un disque de roue et au moins un élément de liaison entre le disque de roue et la jante, l'élément de liaison étant guidé à travers un trou de passage de la jante et assemblé dans un passage d'assemblage du disque de roue, **caractérisée en ce que** l'élément de liaison (3.3) présente un tronçon d'axe de type piston (11), lequel présente une section étendue dans le sens radial par rapport à la section d'un tronçon d'axe côté extrémité et s'étend au mois partiellement dans un creux (7) correspondant du trou de passage (5) et du passage d'assemblage (6) du disque de roue (2.1) par complémentarité de forme.

12. Roue de véhicule selon la revendication 11, **caractérisée en ce que** au moins un disque perforé (10) disposé, avec le tronçon d'axe de type piston (11) inséré, entre la face interne de la jante de roue (1.1, 1.2) et le côté raccordement à la roue du disque de roue (2.1).
